Europäisches Patentamt

European Patent Office

Office européen des brevets

(11) Publication number: **0 157 388**
**B1**

# (12) EUROPEAN PATENT SPECIFICATION

(45) Date of publication of patent specification: **30.05.90**

(21) Application number: **85103815.8**

(22) Date of filing: **29.03.85**

(51) Int. Cl.⁵: **B 01 F 17/00** // C10M177/00

(54) Oil-in-alcohol microemulsion.

(30) Priority: **30.03.84 US 595421**

(43) Date of publication of application:
**09.10.85 Bulletin 85/41**

(45) Publication of the grant of the patent:
**30.05.90 Bulletin 90/22**

(84) Designated Contracting States:
**DE FR GB IT SE**

(56) References cited:
**GB-A- 962 351**
**GB-A-2 074 043**
**US-A-2 982 733**
**US-A-3 404 991**
**US-A-3 458 294**
**US-A-3 615 290**
**US-A-4 371 447**

The file contains technical information
submitted after the application was filed and
not included in this specification

(73) Proprietor: **First Brands Corporation
39 Old Ridgebury Road, J-1392
Danbury, CT 06817-0001 (US)**

(72) Inventor: **Goddard, Errol Desmond
349 Pleasant Lane
Haworth, New Jersey 07641 (US)**
Inventor: **Leung, Pak Sang
15 Woodland Road
Highland Mills, New York 10930 (US)**

(74) Representative: **Wuesthoff, Franz, Dr.-Ing. et al
Wuesthoff & Wuesthoff Patent- und
Rechtsanwälte Schweigerstrasse 2
D-8000 München 90 (DE)**

**Description**

Field of the invention
The present invention relates to an oil-in-alcohol microemulsion comprising an oil, an alcohol, and at least one emulsifier to stabilize the microemulsion.

Background of the invention
Certain types of microemulsions are known in the art. For example, oil-in-water microemulsions or water-in-oil microemulsions are employed in the hydraulic fluid field. By way of illustration, U.S. Patent 4,337,161 discloses oil-in-water microemulsions, whereas U.S. Patent 4,371,447 discloses water-in-oil microemulsions for use in hydraulic fluids, and the like. T. P. Hoar and J. H. Schulman (see Nature *152* 102, 1943) reported the formation of transparent water-in-oil dispersions containing oil, water, alkali-metal soap and an amphipathic substance such as amyl alcohol. Mutual solubilization of benzene and ethylene glycol by means of amphiphiles (e.g., n-dodecanol and "Aerosol OT") was disclosed by P. A. Winsor (see Transactions of the Faraday Soc., *44*, 376, 380 (1948). It has also been proposed that the depression of interfacial tension between the oil and water phases necessary for formation of microemulsion is brought about by the spontaneous distribution of the alcohol amphiphile between the oil phase and the oil/water interfaces. (See L. Prince, J. of Colloid and Interface Sci. *23*, 165 1967).
Microemulsions, sometimes referred to as micellar solutions, soluble oils or swollen micelles, have been discussed in the literature. See, for example, *Microemulsions*, I. D. Robb, Editor, Plenum Press (1981); Technology of Micellar Solutions by W. C. Tosch, Paper No. SPE 1847-b, Society of Petroleum Engineers of AIME (American Institute of Mining, Metallurgical and Petroleum Engineers, Inc., 1967); and, *Emulsions and Emulsion Technology* by Prince, pp. 125—179 (Marcell Dekker, Inc., 1974). Microemulsions are typically characterized by the prior art as clear, bright and transparent, and these characteristics are desirable for purposes of the present invention. These microemulsion characteristics are due to the fact that the particle (i.e. micro-droplet) is typically smaller than the wave-length of visible light. Although clear to the eye, the presence of the microemulsion particles can be detected by instrumental light-scattering techniques. In contrast, macroemulsions are visibly opaque.
The small size of the particles imparts properties to microemulsions that are not found in other fluid systems, particularly macroemulsions which have larger size particles. For example, water-in-oil microemulsions are typically less viscous than water-in-oil macroemulsions formed from the same base oil. This is important in a number of different applications, one of which is lubricating fluids.
The advantages of microemulsions in terms of their improved storage stability, clarity, homogeneity, ease of preparation, and lower viscosity, all as compared to conventional macroemulsions, makes the search for new types of microemulsions particularly attractive.

Object of the invention
It is an object of the present invention to produce an oil-in-alcohol microemulsion that is stable during storage, clear, homogeneous, and easy to prepare.
This and other objects will become apparent upon reading the following detailed description of the invention.

Summary of the invention
In a principal aspect, the present invention relates to an oil-in-alcohol microemulsion composition having a discontinuous phase and a continuous phase comprising:
(a) alcohol, in an amount sufficient to form a continuous phase in the composition;
(b) alcohol-insoluble oil particles forming a discontinuous phase in said composition, said particles having a particle size of less than about 0.1 μm (preferably less than about 0.05 μm): and,
(c) at least one emulsifier, said emulsifier being present in a total amount sufficient to stabilize the composition.

Detailed description of the invention
The oil useful in the present invention can be any material commonly referred to as an "oil", i.e. any of the numerous substances that are liquid or easily liquifiable by warming and are practically insoluble in the continuous phase of the present composition as its use concentration, and having a vapor pressure of less than 106.40 mbar (80 mm of Hg) at 25°C.
As used herein, the term "continuous" or "outer" phase means the alcohol phase that extends through all parts of the microemulsion in a continuous fashion. This outer phase is to be distinguished from the particulate, discontinuous, inner oil phase. As is well recognized in the technical literature, the maximum packing fraction of uniform spheres would make it possible for the continuous phase to be as small in amount as 26 vol. % based upon the total volume of both phases (which is about the same on a weight basis). Preferably, the continuous phase comprises at least 50 wt. % based upon the total weight of both phases.
As used herein, the term "practically insoluble" means that the amount of oil present exceeds the ordinary solubility limit of the oil in the continuous phase of the composition.

The source of the oil includes such diverse sources as animal, vegetable, mineral or synthetic manufacture. Moreover, the composition of the oil can include such diverse materials as predominantly hydrocarbons, such as mineral and petroleum oils, fatty acid esters, fats, silicone oils, polyalkylene oxides and ester derivatives thereof, or mixtures thereof, and the like. The oil phase can also contain one or more additives used to impart certain properties to the microemulsion, such as biocides, oxidation inhibitors, corrosion inhibitors, and the like.

Based upon the above, the term "oil" is intended to include any organic compound which is practically insoluble in alcohol such as ethylene glycol or propylene glycol, or mixtures thereof, but can be emulsified by the use of emulsifiers, and has a vapor pressure of less than 106.40 mbar (80 mmg of Hg) at 25°C. This limit is important in certain applications, such as lubricants, where volatilization and the flash point of the oil component are considerations. Such oils include non-polar and partially polar, aliphatic and aromatic materials, such as mineral oil, paraffin oil, vegetable oil, naphtha oil, methyl-naphthalene oil, petroleum base oil, kerosene, mineral spirit, transformer oil, fuel oil, silicone oil, silane esters, synthetic oil, halogenated oils, polypropylene glycols, propylene oxide/ethylene oxide copolymers, propylene oxide/butylene oxide copolymers, ethylene oxide/butylene oxide copolymers, ethylene oxide/propylene oxide/butylene oxide terpolymers, including the alkyl, aryl and alkyl-aryl end-capped derivatives of the above-mentioned polymers and co-polymers as well as sulfated, sulfonated, phosphated and phosphonated oils, higher alcohols and esters thereof, and the like.

The amount of oil present in the microemulsion of the present invention is between about 0.001 to about 20 (more preferably between about 0.5 and about 5) wt. percent based upon the weight of the composition. Within the above-specified preferred limits, the amount of oil used in the microemulsion is dependent upon the end-use required for the microemulsion. Below 0.001 wt. percent oil, the amount of oil would generally be insufficient to be functional, whereas above 20 wt. percent oil, the amount of corresponding emulsifier required would generally be too costly from an economic standpoint.

The emulsifiers useful in the present invention are non-ionic surfactants such as alcohols, phenols amines, fatty acids and their alkoxylated derivatives, and the like that are well-known in the art. The above surfactants can be used singly or in combination as illustrated in the Example given below, and a combination of at least two surfactants is preferred in order to facilitate microemulsification and reduce or minimize the total surfactant requirement. Also, water in low concentrations is optionally used to enhance the stability of the microemulsions, preferably in an amount of less than 10 weight percent based upon the weight of the microemulsion.

The total emulsifier concentration present in the microemulsion is between about 0.1 times and about 100 times (more preferably between about 2 times and about 10 times) the concentration by weight of oil present in the microemulsion, with the proviso that the total amount of oil plus emulsifier and alcohol not exceed 100 wt percent of the microemulsion. The microemulsion is likely to be unstable if the emulsifier concentration is substantially less than 0.1 times the oil concentration. If the upper limit on surfactant amount is exceeded, it is likely that the resulting composition will not be economically feasible from a commercial standpoint.

It is preferred that the emulsifier(s) used in the present invention be readily soluble in the continuous alcohol phase and only marginally soluble in the discontinuous oil phase of the microemulsion.

The alcohol useful as the continuous (or outer) phase in the present invention is preferably a monohydric or polyhydric alcohol corresponding to the formula $R(OH)_a$ wherein "R" is a member selected from the group consisting of primary, secondary and tertiary hydrocarbon radicals, and wherein "a" is an integer having a value of 1 to 6. Such alcohols include methanol, ethanol, propanol, butanol, ethylene glycol, propylene glycol, glycerol, the monoacetate of propylene glycol, the monoethylether of glycerol, the dimethyl ether of glycerol, sorbitol, 1,2-hexanediol. 1,2,6-hexanetriol, alkoxy alkanols (such as methoxyethanol), trimethylolpropane, pentaerythritol, and the like, and mixtures thereof.

Optional additives may be employed in minor amounts of less than 50 wt. percent based on the total weight of the microemulsion composition. Typical optional additives would include, for example, buffers such as alkali metal borates and phosphates, ultraviolet light stabilizers such as hydroquinone, lubricants such as zinc dithiophosphates, antifoams such as polysiloxanes and polyoxyalkylene glycols, perfumes, colorants, antimicrobials such as glutaraldehyde, anti-oxidants such as t-butylphenol, and the like. The minor additives can be soluble in either the oil or alcohol phase of the microemulsion, or both.

The microemulsions of the present invention can be prepared by any known method such as, for example, by mixing the individual components together for a short period of time of between about five minutes and about two hours. Another procedure for making a microemulsion is to heat a mixture of the individual ingredients, while stirring, and then allow the resulting microemulsion to cool to room temperature. The sequence of addition of the oil, alcohol, and emulsifier to form the microemulsion mixture is not critical and the order most convenient may be selected. However, the preferred sequence of addition to facilitate making the microemulsion as rapidly as possible for some microemulsions involves: first, adding the emulsifier(s) to the oil to form an emulsifier-oil mixture and; second, adding alcohol to the emulsifier-oil mixture, with stirring, to form the microemulsion. Procedures for preparing microemulsions are more fully described, for example, in the text "Microemulsion Theory and Practice", Leon M. Prince, Editor (Academic Press, Inc. 1977).

The following example is intended to illustrate, but in no way limit, the present invention.

3

Example 1

A series of microemulsion compositions of this invention was prepared (compositions 1 through 11 in Table I below) by mixing the components of each microemulsion, as outlined in Table I below. In addition, a control example (as identified in Table I below) and several comparative examples (A through D in Table I) were also prepared. Each composition was prepared using a total of between about 20 and about 50 total grams of surfactant, as specified in Table I, plus oil plus alcohol. Each total formulation was made by mixing the components in each of the compositions 1 through 11 for a period of time of between five minutes and two hours, depending upon the time required to form each microemulsion or simple dispersion. The sequence of addition of ingredients was as follows: first the surfactants (i.e. emulsifiers), as specified in Table I, were added to the oil selected. Second, the alcohol was added with mixing to provide the microemulsion or dispersion. A clear appearance was observed visually when looking at each of the individual microemulsion compositions 1 through 11. In contrast, comparative formulations A through C provided milky dispersions when examined visually. The control formulation appeared to be a two-phase system with a clear line of separation between the separate phases of paraffin and methanol.

As can be seen from Table I, the amount of oil, alcohol, and surfactant can be varied substantially while still providing a final product having the clear appearance of a microemulsion. The microemulsion compositions 1 through 11 summarized in Table I were prepared using near minimum amounts of emulsifiers, although higher amounts can be used, if desired, to facilitate preparation of the microemulsions. Specifically, it should be noted that the total amount of emulsifier selected was decreased gradually when the alcohol chosen was varied from methanol to ethanol to isopropanol or propylene glycol to ethylene glycol. The largest amount of surfactant used was 44.2 wt. percent in a single surfactant/methanol/paraffin oil formulation (see Composition 1 in Table I). The least total amount of surfactant used was 5.9 wt. percent in a two-surfactant/ethylene glycol/#2 fuel oil formulation (see Composition 9 in Table I).

When using ethanol or isopropanol as the alcohol in a two-surfactant formulation with paraffin oil as the oil, low levels of total surfactant of 9.1 and 5.0 weight percent, respectively, for ethanol and for isopropanol, were found to be insufficient to form microemulsions. Instead, macroemulsions in the form of coarse dispersions were produced (see Compositions A and B in Table I). In contrast, ethanol in a single-surfactant formulation at a level of 14.2 wt. percent surfactant was found to produce a microemulsion (see Composition 4 in Table I). Likewise propylene glycol in a single surfactant formulation at a level of 30 wt. percent surfactant was found to produce a microemulsion (see composition 10 in Table I). Likewise, isopropanol in a two-surfactant formulation at a total surfactant level of 15.5 wt. percent was found to produce a microemulsion (see Composition 6 in Table I).

In order to demonstrate the preparation of microemulsions using other oils, Compositions 10 and 11 were made using corn oil and silicone oil, respectively.

EP 0 157 388 B1

TABLE I***

| | Control | Comp. 1 | Comp. 2 | Comp. A | Comp. 3 | Comp. 4 | Comp. 5 | Comp. B | Comp. 6 | Comp. C | Comp. D | Comp. 7 | Comp. 8 | Comp. 9 | Comp. 10 | Comp. 11 |
|---|---|---|---|---|---|---|---|---|---|---|---|---|---|---|---|---|
| Oil Paraffin 0.1 | 3 % | 1.8% | 2.3% | 2.9% | 2.0% | 2.8% | 1.7% | 20 % | 17.8% | 1.2% | 69.4% | 1.1% | 2.1% | -- | -- | -- |
| Fuel Oil No. 2 | -- | -- | -- | -- | -- | -- | -- | -- | -- | -- | -- | -- | -- | 1.3% | -- | -- |
| Corn Oil | -- | -- | -- | -- | -- | -- | -- | -- | -- | -- | -- | -- | -- | -- | 4.4% | -- |
| Silicone Oil**** | -- | -- | -- | -- | -- | -- | -- | -- | -- | -- | -- | -- | -- | -- | -- | 4.7% |
| **Alcohol** | | | | | | | | | | | | | | | | |
| Methanol | 97% | 54% | 68% | -- | -- | -- | -- | -- | -- | -- | -- | -- | -- | -- | -- | -- |
| Ethanol | -- | -- | -- | 88% | 74.5% | 87.7% | -- | -- | -- | -- | -- | -- | -- | -- | 88.8% | 46.5% |
| Isopropanol | -- | -- | -- | -- | -- | -- | -- | 75% | 66.7% | -- | -- | -- | -- | -- | -- | -- |
| Ethylene Glycol | -- | -- | -- | -- | -- | -- | -- | -- | -- | 95% | 3.4% | 87.9% | 83% | 92.8% | -- | -- |
| **Water** | -- | -- | -- | -- | -- | -- | -- | -- | -- | -- | -- | -- | 4.3% | -- | -- | -- |
| **Surfactant 1*** | | | | | | | | | | | | | | | | |
| "Tergitol NP4" | -- | -- | 2.3% | 2.9% | 2.5% | -- | 3% | 2.5% | 6.7% | 1.2% | -- | -- | -- | -- | -- | -- |
| "Tergitol 15S3" | -- | -- | -- | -- | -- | 14.2% | -- | -- | -- | -- | 23.7% | 1.1% | 2.1% | 1.4% | 2.3% | -- |
| "Tergitol 15S5" | -- | 44.2% | -- | -- | -- | -- | -- | -- | -- | -- | -- | -- | -- | -- | -- | -- |
| PPG***** | -- | -- | -- | -- | -- | -- | -- | -- | -- | -- | -- | -- | -- | -- | -- | 11.6% |
| **Surfactant 2*** | | | | | | | | | | | | | | | | |
| Decyl alc. | -- | -- | 27.4% | -- | -- | -- | -- | -- | -- | -- | -- | -- | -- | -- | -- | -- |
| "Tergitol NP27" | -- | -- | -- | 6.2% | 21% | -- | -- | -- | -- | -- | -- | -- | -- | -- | -- | -- |
| "Tergitol 15S7" | -- | -- | -- | -- | -- | -- | 7.6% | -- | -- | -- | -- | -- | -- | -- | -- | -- |
| "Tergitol 25L3" | -- | -- | -- | -- | -- | -- | -- | -- | -- | -- | -- | -- | -- | -- | -- | -- |
| "Tergitol 25L7" | -- | -- | -- | -- | -- | -- | -- | 2.5% | 8.8% | 2.6% | 3.5% | 9.9% | 8.5% | -- | 4.5% | 37.2% |
| "Tergitol 25L20" | -- | -- | -- | -- | -- | -- | -- | -- | -- | -- | -- | -- | -- | 4.5% | -- | -- |
| Appearance** | 2P | C | C | CD | C | C | C | CD | C | CD | C | C | C | C | C | C |

Footnotes—Table I

 * The above "Tergitol"[TM] compounds are identified as follows:

  NP4 is a nonylphenol ethoxylate having 4 ethoxy units per molecule average.

  NP27 is a nonylphenol ethoxylate having 7 ethoxy units per molecule average.

  25L20 is an ethoxylate of linear alcohol having an average number of carbons between 12 and 15 and having 20 ethoxy groups per molecule average.

  25L7 is an ethoxylate of linear alcohol having an average number of carbons between 12 and 15 and having 7 ethoxy groups per molecule average.

  15S3 is a mixture of ethoxylates of random linear secondary alcohols having 11 to 15 carbon atoms wherein the average number of ethoxy groups per molecule is 3.

  15S7 is a mixture of ethoxylates of random linear secondary alcohols having 11 to 15 carbon atoms wherein the average number of ethoxy groups per molecule is 7.

  15S5 is a mixture of ethoxylates of random linear secondary alcohols having 11 to 15 carbon atoms wherein the average number of ethoxy groups per molecule is 5.

 ** 2P—Two phases C—Clear CD—Coarse Dispersion

 *** All per cents are weight percents based upon the total weight of the composition.

 **** Silicone oil L-45 having a room temperature viscosity of $5.0 \times 10^{-6}$ m²/s (50 centistokes).

 ***** Polypropylene glycol having an average molecular weight of 425.

Example 3

In order to demonstrate the usefulness of a composition of the present invention as a lubricating fluid, the following composition was prepared and tested:

| Component | Composition 12 (in grams) |
|---|---|
| Paraffin oil | 2 |
| Ethylene glycol | 200 |
| "Tergitol NP4"# | 2 |
| "Tergitol 25L7"# | 17 |

# Defined in Example 1.

Composition 12 formed a stable, clear microemulsion. It was tested using the FALEX wear test apparatus wherein the load was increased by 113 kg (250 lbs) every 3 minutes into the test. Composition 12 provided lubrication exceeding 20 minutes of test time at a load reaching 680 kg (1500 lbs). In contrast, a control ethylene glycol formulation caused the apparatus to seize after 11 minutes and a load of up to 454 kg (1000 lbs) causing a steel pin in the apparatus breaking. On the basis of the above, Composition 12 was determined to be a good lubricating fluid.

**Claims**

1. An oil-in-alcohol microemulsion composition having a discontinuous phase and a continuous phase comprising:

(a) alcohol, in an amount sufficient to form a continuous phase in the composition, and

(b) alcohol-insoluble oil particles having a vapor pressure of less than 106,40 mbar (80 mm of Hg) at 25°C and forming a discontinuous phase in said composition, said particles having a particle size of less than about 0.1 µm; and

(c) at least one emulsifier, selected from the group consisting of nonionic surfactants, said emulsifier being present in an amount sufficient to stabilize the composition, wherein said alcohol-insoluble oil particles are present in an amount of between about 0.001 and about 20 wt. percent based on the weight of the composition, and wherein said emulsifier is present in an amount of between about 0.1 times and about 100 times the weight of said alcohol-insoluble oil particles in the composition, and wherein said alcohol is present in an amount of at least about 26 wt. percent based on the weight of the composition, with the proviso that the total weight of the composition does not exceed 100 wt. percent, said composition being devoid of anionic surface-active agent.

2. The composition of claim 1 wherein said alcohol is a monohydric or polyhydric alcohol corresponding to the formula $R(OH)_a$ wherein "R" is a member selected from the group consisting of primary, secondary and tertiary hydrocarbon radicals, and wherein "a" is an integer having a value of 1 to 6.

3. The composition of claim 1 or 2 wherein said emulsifier consists essentially of nonionic surfactants.

4. The composition of claim 3 wherein said non-ionic surfactants are ethoxylates of alcohols and alkyl phenols.

5. The composition of anyone of claims 1 to 4 wherein said insoluble particles have an average particle size of less than 0.05 µm.

6. The composition of anyone of claims 1 to 5 which additionally contains at least one minor additive

## EP 0 157 388 B1

selected from the group consisting of lubricants, buffers, anti-foams, ultra-violet light stabilizers, corrosion inhibitors, perfumes, colorants and antimicrobials in a total amount of less than 50 wt. percent based on the wt. of the composition.

7. The composition of anyone of claims 1 to 6, wherein the amount of alcohol (a) is at least 50 wt. percent of the total weight of the composition.

8. The composition of anyone of claims 1 to 7, wherein said emulsifier is present in an amount of between about 2 and about 10 times the weight of said alcohol-insoluble oil particles in the composition.

### Patentansprüche

1. Öl-in-Alkohol-Mikroemulsionszusammensetzung mit einer diskontinuierlichen Phase und einer kontinuierlichen Phase, welche umfaßt:

(a) Alkohol in einer Menge, die ausreicht, eine kontinuierliche Phase in der Zusammensetzung zu bilden, und

(b) Alkohol-unlösliche Ölteilchen mit einem Dampfdruck von weniger als 106,40 mbar (80 mm Hg) bei 25°C, die eine diskontinuierliche Phase in der Zusammensetzung bilden, wobei die Teilchen eine Teilchengröße von weniger als etwa 0,1 μm haben, und

(c) wenigstens einen Emulgator, ausgewählt aus der aus nichtionischen oberflächenaktiven Mitteln bestehenden Gruppe, wobei der Emulgator in einer zur Stabilisierung der Zusammensetzung ausreichenden Menge vorhanden ist,

worin die Alkohol-unlöslichen Ölteilchen in einer Menge zwischen etwa 0,001 und etwa 20 Gew.-%, bezogen auf das Gewicht der Zusammensetzung, vorhanden ist und worin der Emulgator in einer Menge zwischen dem etwa 0,1-fachen und etwa 100-fachen des Gewichts der Alkohol-unlöslichen Ölteilchen in der Zusammensetzung vorhanden ist und worin der Alkohol in einer Menge von wenigstens etwa 26 Gew.-%, bezogen auf das Gewicht der Zusammensetzung, vorhanden ist, mit der Maßgabe, daß das Gesamtgewicht der Zusammensetzung 100 Gew.-% nicht überschreitet, welche Zusammensetzung frei von anionischem oberflächenaktivem Mittel ist.

2. Zusammensetzung nach Anspruch 1, worin der Alkohol ein einwertiger oder mehrwertiger Alkohol entsprechend der Formel R(OH)$_a$ ist, worin "R" ein aus der aus primären, sekundären und tertiären Kohlenwasserstoffresten bestehenden Gruppe ausgewähltes Glied ist und worin "a" eine ganze Zahl mit einem Wert von 1 bis 6 ist.

3. Zusammensetzung nach Anspruch 1 oder 2, worin der Emulgator im wesentlichen aus nicht-ionischen oberflächenaktiven Mitteln besteht.

4. Zusammensetzung nach Anspruch 3, worin die nicht-ionischen oberflächenaktiven Mittel Ethoxylate von Alkoholen und Alkylphenolen sind.

5. Zusammensetzung nach einem der Ansprüche 1 bis 4, worin die unlöslichen Teilchen eine durchschnittliche Teilchengröße von weniger als 0,05 μm haben.

6. Zusammensetzung nach einem der Ansprüche 1 bis 5, welche zusätzlich in geringeren Mengen wenigstens ein aus der aus Schmiermitteln, Puffern, Antischaummitteln, UV-Stabilisatoren, Korrosionsinhibitoren, Parfums, Farbstoffen und antimikrobiellen Mitteln bestehenden Gruppe ausgewähltes Additiv in einer Gesamtmenge von weniger als 50 Gew.-%, bezogen auf das Gewicht der Zusammensetzung, enthält.

7. Zusammensetzung nach einem der Ansprüche 1 bis 6, worin die Menge an Alkohol (a) wenigstens 50 Gew.-% des Gesamtgewichts der Zusammensetzung ausmacht.

8. Zusammensetzung nach einem der Ansprüche 1 bis 7, worin der Emulgator in einer Menge zwischen dem etwa 2- und dem etwa 10-fachen des Gewichts der Alkohol-unlöslichen Ölteilchen in der Zusammensetzung vorhanden ist.

### Revendications

1. Une composition de micro-émulsion huile dans l'eau, comportant une phase discontinue et une phase continue comprenant:

(a) un alcool, en une quantité suffisante pour former une phase continue dans la composition, et

(b) des particules d'huile insolubles dans l'alcool, présentant une tension de vapeur inférieure à 106,40 mbar (80 mm de Hg) à 25°C et formant une phase discontinue dans ladite composition, lesdites particules présentant une dimension des particules inférieure à environ 0,1 μm, et

(c) au moins un émulsifiant choisi dans le groupe constitué par les agents tensioactifs non-ioniques, ledit émulsifiant étant présent en une quantité suffisante pour stabiliser la composition, dans laquelle lesdites particules d'huile insolubles dans l'alcool sont présentes en une quantité entre environ 0,001 et environ 20% en poids, en se basant sur le poids de la composition, et dans laquelle ledit émulsifiant est présent en une quantité entre environ 0,1 fois et environ 100 fois le poids desdites particules d'huile insolubles dans l'alcool dans la composition, et dans lequel ledit alcool est présent en une quantité d'au moins 26% en poids, en se basant sur le poids de la composition, sous la condition que le poids total de la composition n'excède pas 100% en poids, ladite composition étant démunie d'agent tensioactif anionique.

2. La composition de la revendication 1, dans laquelle ledit alcool est un alcool monohydrique ou

7

polyhydrique correspondant à la formule R(OH)$_a$ dans laquelle "R" est un élément choisi dans le groupe constitué par les radicaux d'hydrocarbure primaire, secondaire et tertiaire et dans laquelle "a" est un nombre entier présentant une valeur de 1 à 6.

3. La composition de la revendication 1 ou 2, dans laquelle ledit émulsifiant est constitué essentiellement d'agents tensioactifs non-ioniques.

4. La composition de la revendication 3, dans laquelle lesdits agents tensioactifs non-ioniques sont des éthoxylates d'alcools et d'alkyl-phénols.

5. La composition de l'une quelconque des revendications 1 à 4, dans laquelle lesdites particules insolubles ont une dimension moyenne des particules inférieures à 0,05 µm.

6. La composition selon l'une quelconque des revendications 1 à 5, qui renferme en outre au moins un additif en faible quantité, choisi dans le groupe constitué par les lubrifiants, les tampons, les agents anti-mousse, les agents stabilisants ou la lumière ultraviolette, les inhibiteurs de corrosion, les parfums, les colorants et les agents antimicrobiens en une quantité totale inférieure à 50% en poids, en se basant sur le poids de la composition.

7. La composition de l'une quelconque des revendications 1 à 6, dans lesquelles la quantité d'alcool (a) est d'au moins 50% en poids du poids total de la composition.

8. La composition de l'une quelconque des revendications 1 à 7, dans laquelle ledit émulsifiant est présent en une quantité entre environ 2 et environ 10 fois le poids desdites particules d'huile insolubles dans l'alcool, dans la composition.